# EUROPEAN PATENT APPLICATION

(11) **EP 1 964 975 A2**
(43) Date of publication of application: **03.09.2008**
(21) Application number: 08152178.3
(22) Date of filing: 29.02.2008
(51) Int. Cl.: E01F 15/04

(54) **Modular guardrail**

(30) Priority: 02.03.2007 IT TO20070161
(71) Applicant: Fracasso S.p.A., 30032 Fiesso d'Artico (VE) (IT)
(72) Inventor: Fracasso, Alvise, 30039 Stra (IT); Quaggio, Moreno, 35020 Brugine (IT)
(74) Representative: Jorio, Paolo

(57) **Abstract**

A modular guardrail (1) formed by a series of vertical supporting uprights (2) fixed to the ground one after another along the edge of the road, and by one or more longitudinal members (3) fixed on the vertical uprights (2) one after another in a substantially horizontal position to form a longitudinal containment cross-member that extends along the roadside, at a given height from the ground; the longitudinal members (3) and/or the vertical uprights (2) being formed by one or more half-shells or profiled elements with complex cross section (12, 13, 14, 15), and which are designed to partially overlap and then be stably fixed one to the other, and by a series of through fixing elements (4) structured to lock the half-shells or profiled elements with complex cross section (12, 13, 14, 15) one another in a stable way; at least one of the through fixing elements (4) comprising an expansion plug (5) made of vulcanized rubber, and which is designed to be mounted passing through two or more overlapping flaps of the half-shells or profiled elements with complex cross section (12, 13, 14, 15), and an expander nail (6) made of plastic or metal material, and which is designed to be force-fitted into the aforesaid expansion plug (5) so as to cause expansion of the body of the expansion plug (5) against the flaps of the half-shells or profiled elements with complex cross section (12, 13, 14, 15) with consequent stable locking thereof against one another.

## Description

The present invention relates to a modular guardrail.

In particular, the present invention relates to a modular guardrail structured so as to be able to attenuate in an optimal way the impact of a motorcyclist or cyclist against the guardrail itself, use to which the following description refers purely by way of example, without this implying any loss of generality.

As is known, road safety barriers that are currently most widely used, commonly known by the term "guardrail", are made of metal and are made up of a series of supporting upright driven into the ground vertically one after the other along the roadside, and a series of longitudinal containment members, which are fixed on the supporting uprights horizontally one after the other, so as to form a longitudinal containment cross-member that extends substantially without interruptions along the roadside, at a given height from the ground.

Unfortunately the guardrails referred above are carefully structured and sized so as to be able to withstand and stop a motor vehicle having a mass normally higher than a ton, subjecting the occupants thereof to decelerations smaller than a limit value established by type-approval standards, and thus they can constitute an extremely dangerous obstacle for motorcyclists or cyclists that, in case of fall, might bang violently against the supporting uprights of the guardrail.

In fact, it very frequently occurs that the motorcyclist or the cyclist, after falling, proceeds his course sliding on the road surface until he hits violently against one of the uprights of the guardrail set along the roadside, undergoing in the majority of cases particularly serious injuries. Such injuries may prove fatal even with relatively low speeds of impact, when the guardrail is provided with supporting uprights with sharp edges.

Aim of the present invention is thus to provide a guardrail that is able to attenuate appropriately and gradually the impact of a motorcyclist or cyclist against said guardrail so as to reduce the traumatic consequences suffered by the motorcyclist or cyclist upon impact.

According to the present invention, there is provided a modular guardrail as specified in Claim 1 and preferably, though not necessarily, in any one of the claims depending thereon.

Moreover according to the present invention there is provided a through fixing element for modular guardrails as specified in Claim 22 and preferably, though not necessarily, in any one of the claims depending thereon.

The present invention will now be described with reference to the annexed drawings, which illustrate a non-limiting example of embodiment thereof and in which:
- Figure 1 shows a side view, with parts in cross section and parts removed for reasons of clarity, of a modular guardrail built according to the dictates of the present invention;
- Figure 2 shows an exploded three-dimensional view of the guardrail illustrated in Figure 1; and
- Figure 3 shows a front view of a component of the guardrail illustrated in Figure 1.

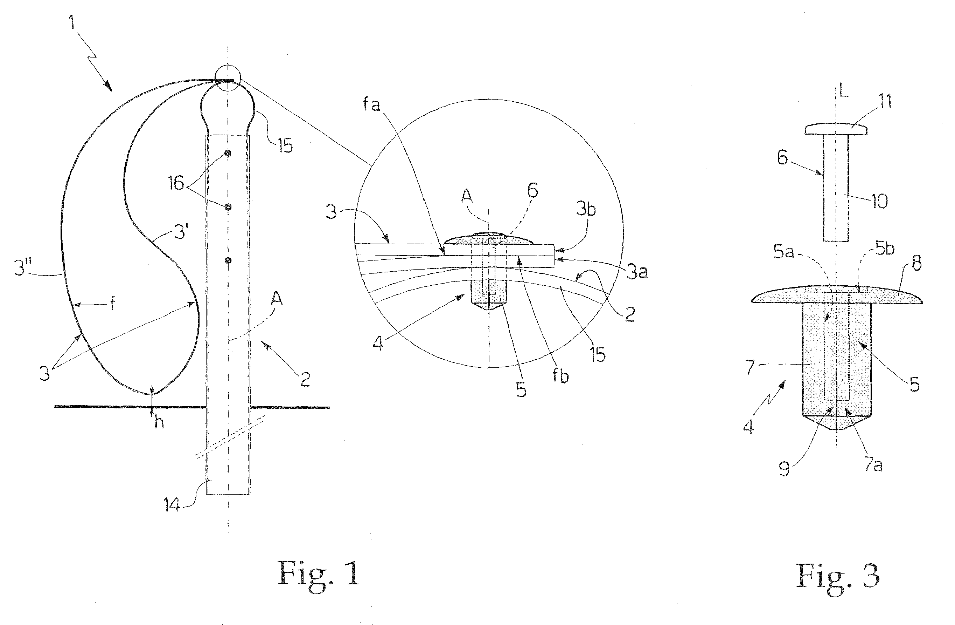

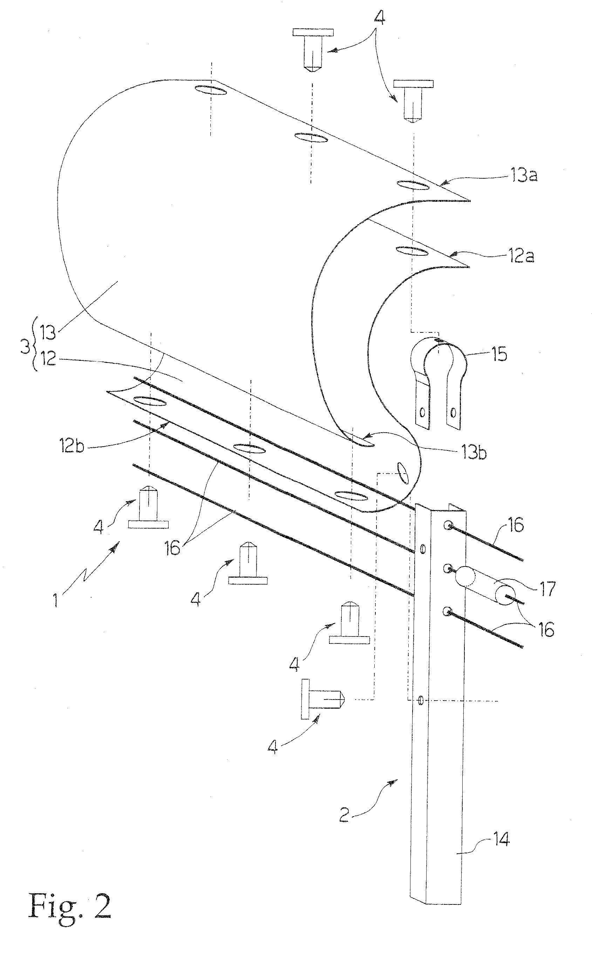

With reference to Figures 1 and 2, number 1 indicates as a whole a modular guardrail purposely developed for being installed along the roadside to absorb progressively the kinetic energy of a motorcycle, a motor vehicle or a similar vehicle that bumps against the guardrail, with the purpose, at the same time, of re-directing the aforesaid vehicle towards the centre of the carriageway. Guardrail 1 is moreover structured so as to succeed in attenuating in a controlled and progressive way the impact of a cyclist, motorcyclist or the like who, sliding on the road surface, bangs against the guardrail.

Guardrail 1 is formed basically by a series of vertical supporting uprights 2 (only one of which is illustrated in the attached figures), which are fixed to the ground one after the other along the roadside, and by one or more longitudinal members 3 of appropriate length, which are fixed on the vertical uprights 2 one after the other in a substantially horizontal position, so as to form at least one longitudinal containment cross-member that extends substantially without interruptions along the roadside, at a given height from the ground.

In turn, vertical uprights 2 and/or longitudinal members 3 of guardrail 1 are formed by a plurality of half-shells or profiled elements made of metal or composite material and with complex cross-section, that are designed to overlap partially and then be stably fixed to one another, and by a series of through fixing elements that are structured so as to lock the various half-shells or profiled elements to one another in a stable way.

With reference to Figures 1 and 3, unlike currently known solutions, at least one of the through fixing elements mentioned above (all in the example shown), hereinafter designated by the number 4, is basically formed by an expansion plug 5 made of vulcanized rubber, which is designed to be mounted passing through two or more overlapping flaps of one or more of the aforesaid half-shells or profiled elements with complex cross section, and by an expander nail 6 made of plastic or metal material, which is designed to be force-fitted into expansion plug 5 so as to cause expansion of the body of expansion plug 5 against the flaps of the half-shells or profiled elements with complex cross-section, with consequent stable locking thereof one against the other.

More specifically, expansion plug 5 is preferably, though not necessarily, made of tear-resistant and fire-resistant vulcanized rubber, and is formed by a stem 7 having a substantially cylindrical shape, which extends coaxial with longitudinal axis L of expansion plug 5, and by a flanged head 8 substantially shaped like a spherical cap, which extends in cantilever fashion from an end of stem 7 coaxial with longitudinal axis L of the expansion plug, so as to form a substantially mushroom-shaped monolithic body 5.

Moreover expansion plug 5 is provided with a central hole 5a, which extends through head 8 and at least one stretch of stem 7, remaining locally coaxial with longitudinal axis L of the expansion plug; whilst stem 7 terminal segment 7a facing the opposite side of head 8, has a preferably, though not necessarily, ogival or cone-truncated shape tapered towards the end, and is preferably, though not necessarily, provided with two diametral cuts 9, which develop along two mutually perpendicular planes intersecting in an area corresponding to longitudinal axis L of the expansion plug, so as to divide terminal segment 7a of stem 7 into four sectors or spherical wedges angularly distributed about longitudinal axis L of expansion plug 5.

Obviously, terminal segment 7a of stem 7 can be divided into a number of sectors or spherical wedges greater or smaller than four, by appropriately varying the number and arrangement of diametral cuts 9. For example, terminal segment 7a of stem 7 can be divided into just two sectors or spherical wedges by means of just one diametral cut 9.

With reference to Figures 1 and 3, instead expander nail 6 is made preferably, though not necessarily, of nylon, Teflon, steel or zinc-plated iron, and is formed by a stem 10 having a substantially cylindrical shape, which extends coaxial with the nail longitudinal axis - coinciding in use with the longitudinal axis L of expansion plug 5 -, and is designed to engage the central hole 5a present in expansion plug 5; and by a flanged head 11 substantially shaped like a spherical cap, and which extends in cantilever fashion from one end of stem 10 coaxial with the nail longitudinal axis, so as to form a substantially mushroom-shaped monolithic body 6.

Stem 10 moreover has an external diameter that approximates by excess the diameter of the central hole 5a present in expansion plug 5, so as to cause, when force-fitted within expansion plug 5, an elastoplastic expansion of the body of stem 7 of expansion plug 5 with consequent increase in the external diameter of stem 7, and a divarication of the sectors or spherical wedges present in an area corresponding to terminal segment 7a of stem 7 of expansion plug 5.

In the example shown, head 11 of nail 6 is, instead, shaped so as to occupy a seat 5b purposely realized on head 8 of expansion plug 5, and has a profile complementary to that of head 8 of expansion plug 5.

As regards, instead, the other components of guardrail 1, in the example shown at least one of longitudinal members 3 (all in the example shown) making up guardrail 1, is formed by a rigid, controlled-deformation strip 3 of composite material, which is bent back on itself so as to bring the two flaps or opposite side margins fₐ and f_{b} of one a same face f of strip 3 to bear upon one another, thus forming a tubular body with complex cross section, which is fixed on at least two consecutive vertical uprights 2 of the guardrail so as to be substantially parallel to the ground, at a given height from the ground itself.

More specifically, strip 3 made of composite material is fixed to vertical uprights 2 of the guardrail in an area corresponding to the longitudinal ribbing formed by overlapping the two opposite side flaps fₐ and f_{b} of the face f of strip 3, so that the tubular body formed by strip 3 projects in cantilever fashion from the vertical laying plane of vertical uprights 2 and towards the road immediately in front of it, and then extends towards the ground, i.e. downwards along the side of vertical uprights 2 themselves, positioning the central section of strip 3 at a minimum distance h from the ground preferably, though not necessarily, comprised between 1 and 10 centimetres.

In other words, composite-material made strip 3 is bent back on itself so that thereon two contiguous longitudinal portions 3' and 3" are identifiable; the first of which is laterally delimited by a side edge 3a of strip 3, directly faces vertical uprights 2 of the guardrail, and it finally has a substantially S-shaped cross section, so that the side edge 3a of strip 3 is positioned in the proximity of the tops of vertical uprights 2 of the guardrail, and that the boundary line with longitudinal portion 3" is positioned underneath the side edge 3a of strip 3, at a minimum distance h from the ground, preferably, though not necessarily, comprised between 1 and 10 centimetres.

Longitudinal portion 3" is, instead, laterally delimited by the second side edge 3b of strip 3, directly faces the road, and has a substantially C-shaped cross section so as to cover longitudinal portion 3' and so as that the second side edge 3b of strip 3 is positioned bearing upon first side edge 3a to form a tubular body with a substantially pear-shaped cross section.

In the example shown, in particular, the two side edges 3a and 3b of strip 3 are fixed one to the another by means of a series of through fixing elements 4 each of which comprises an expansion plug 5 made of vulcanized rubber and a corresponding expander nail 6 made of plastic or metal material, and which are appropriately distributed along the side edges 3a and 3b of strip 3.

The two side edges 3a and 3b of strip 3 are moreover stably fixed on the top ends of two consecutive guardrail vertical uprights 2 by some of the aforesaid through fixing elements 4 so as to cover the top part of vertical uprights 2 themselves.

With reference to Figure 2, in the example shown, in particular, composite-material made strip 3 is formed basically by two half-shells 12 and 13 made of a controlled-deformation composite material, which are rigidly fixed one to the other in an area corresponding to the lateral side edges preferably, though not necessarily, through a second series of through fixing expansion elements 4, each of which comprises an expansion plug 5 made of vulcanized rubber and a corresponding expander nail 6 made of plastic or metal material.

More specifically, half-shell 12 is formed by a rectilinear profiled element 12 made of composite material and with a substantially S-shaped cross section, which extends parallel to the ground and is fixed to guardrail vertical uprights 2 so as to have a first side edge 12a resting on the top end of vertical uprights 2, and a second side edge 12b extending parallel to the ground, underneath side edge 12a, at a height from the ground substantially equal to the minimum distance h of strip 3 from the ground itself.

Half-shell 13, instead, is formed by a rectilinear profiled element 13 made of composite material and with a substantially C-shaped cross section, which extends parallel to the ground and is fixed to guardrail vertical uprights 2 above profiled element 12, so to have a first side edge 13a bearing upon the side edge 12a of profiled element 12, and hence on the underneath ends of vertical uprights 2, and a second side edge 13b bearing upon the side edge 12b of profiled element 12.

As regards, instead, the coupling via the through fixing elements 4, in the example shown each of the two profiled elements 12 and 13 is provided with a series of through holes that are appropriately distributed along the side edges 12a and 12b, 13a and 13b of the profiled element, so as to be superimposed to the through holes present on the side edges 13a and 13b, 12a and 12b of the other profiled element when the two profiled elements 12 and 13 overlap one another; and the through fixing elements 4 are designed to be inserted and then deformed by force within the aforesaid through holes.

More specifically, the side edges 12a and 13a of profiled elements 12 and 13 correspond to the two side edges 3a and 3b of strip 3, and are stably connected one to the other via a first series of through fixing elements 4 which are inserted and then deformed by force within the various holes distributed along the side edges 12a and 13a of profiled elements 12 and 13. A second series of through fixing elements 4 engages, instead, the through holes distributed along the side edges 12b and 13b of profiled elements 12 and 13, so to stably withhold the side edge 13b of profiled element 13 in abutment against the side edge 12b of profiled element 12.

In addition to the above, as already mentioned, some of the through fixing elements 4 that lock the side edge 13a of profiled element 13 in abutment against the side edge 12a of profiled element 12 are designed also to anchor stably the two profiled elements 12 and 13 that form strip 3 directly on the top ends of guardrail vertical uprights 2.

As regards, instead, vertical supporting uprights 2, with reference to Figures 1 and 2, in the example shown each of them is basically formed by a rigid bar 14 made of composite material and with preferably, though not necessarily, an U-shaped cross section, which is driven partially into the ground in a substantially vertical position; and by an elastic connection bracket 15, which is fixed on the top end of bar 14 so as to interpose itself between bar 14 and the longitudinal ribbing formed by overlapping the two side edges 3a and 3b of strip 3, i.e. the ribbing formed by overlapping the side edge 13a of profiled element 13 to the side edge 12a of profiled element 12.

In the example shown, in particular, elastic bracket 15 is formed by a controlled-deformation, elongated rectangular strap of composite material, which is bent substantially into an inverted U with an arc-shaped central portion, and is fixed rigidly at both ends to bar 14 to form an elastic member on which strip 3, i.e. longitudinal containment cross-member of the guardrail, rests directly and is firmly fixed.

More specifically, in the example shown in Figures 1 and 2, the arc-shaped central portion of elastic bracket 15 has a through slot or hole preferably, though not necessarily, aligned with the longitudinal axis A of bar 14, and in which is forced one of the through fixing elements 4 holding the two opposite lateral side flaps fₐ and f_{b} of face f of strip 3, i.e. the side edge 13a of profiled element 13 and the side edge 12a of profiled element 12, firmly one on top of the other.

With reference to Figures 1 and 2, guardrail 1 is preferably, though not necessarily, provided also with a series of retaining wires 16 which extend parallel to the ground and vertically staggered one to the other, close to the longitudinal members 3 forming the longitudinal containment cross-member, engaging in sliding manner corresponding through holes purposely made on guardrail vertical uprights 2 or, rather, on vertical bar 14, and which have the ends anchored stably to the ground in a known way.

In addition to the above, guardrail 1 also comprises a series of tensioning devices 17, which are distributed on the various retaining wires 16, and are structured so as to enable adjustment, and possibly also maintenance over time, of the value of the tension force acting on the retaining wire 16 on which the individual tensioning devices 17 are fitted.

In the example shown, in particular, each retaining wire 16 is formed by a series of twisted filaments made of composite material of appropriate cross section.

As regards, instead, the materials used, the two half-shells 12 and 13 that form strip 3 are preferably, though not necessarily, made up of one or more overlapping layers of appropriately interwoven glass fibres and/or carbon fibres and/or aramidic fibres embedded in a matrix of epoxy-resin preferably, though not necessarily, with self-extinguishing characteristics. Likewise, bars 14 and elastic brackets 15 forming vertical uprights 2 are preferably, though not necessarily, made up of one or more overlapping layers of appropriately interwoven glass fibres and/or carbon fibres and/or aramidic fibres embedded in a matrix of epoxy-resin, preferably, though not necessarily, with self-extinguishing characteristics.

Retaining wires 16 are, instead, preferably, though not necessarily, formed by a sheaf of twisted strands made of nylon and/or carbon, or similar synthetic materials.

Functioning of guardrail 1 is altogether similar to currently known guardrails, and therefore requires no explanation, except to point out that the particular design of longitudinal members 3, combined with the materials used to enable them to gradually absorb the motorcyclist or cyclist impact against the guardrail longitudinal containment cross-member both when the person bumps against the longitudinal cross-member sliding on the road surface, and when the person falls heavily on the longitudinal containment cross-member after being thrown off the vehicle.

In the first case, longitudinal member 3 gradually deforms elastoplastically in the area of impact, absorbing the kinetic energy of the person so as to restrain the value of the deceleration undergone by said person within acceptable limits. In the second case, instead, longitudinal member 3 flexes in the area of impact whilst elastic brackets 15 made of composite material set on top of vertical uprights 2 deform progressively so that the combined effect of the two elastoplastic deformations can restrain within acceptable limits the deceleration value undergone by the person striking the guardrail.

In addition to the above, the particular shape of longitudinal members 3 prevents the person that reaches guardrail 1, sliding on the road surface, from passing beyond the guardrail itself, and sliding underneath the longitudinal containment cross-member. The bottom edge of longitudinal member 3, in fact, is located at a minimum distance h from the ground such as to prevent the passage of a person in the supine position underneath the longitudinal member itself.

Obviously, thanks to the presence of retaining wires 15, guardrail 1 is still capable of gradually absorbing the kinetic energy of a car striking the guardrail, and so stopping and/or redirecting the car towards the centre of the road, while subjecting the occupants thereof to decelerations in accordance with the type-approval standards.

The particular structure of through fixing elements 4 enables, instead, assembly and laying of guardrail 1 with extreme rapidity, without this impairing in any way the performance of guardrail 1. Rather, in the event of impact, the elastoplastic deformation and the possible tearing of expansion plugs 5 made of vulcanized rubber contributes to progressively absorb part of the energy of the vehicle or of the person that bumps against guardrail 1.

The advantages afforded by guardrail 1 are evident: thanks to its particular conformation and to the particular materials used, guardrail 1 is able to arrest completely and/or redirect towards the centre of the carriageway a motor vehicle or the like that bumps violently against said guardrail, subjecting the occupants of the vehicle to decelerations in compliance with the type-approval standards, and also to attenuate appropriately and gradually the impact of a motorcyclist or cyclist against said guardrail so as to reduce the traumatic consequences suffered by the motorcyclist or cyclist following upon impact.

Clearly, changes may be made to guardrail 1 as described and illustrated herein without, however, departing from the scope of the present invention.

## Claims

1. A modular guardrail (1) comprising a series of vertical supporting uprights (2) fixed to the ground one after another along the edge of the road, and one or more longitudinal members (3) fixed on said vertical uprights (2) one after another in a substantially horizontal position, so as to form a longitudinal containment cross-member that extends along the roadside, at a pre-set height from the ground;
the guardrail (1) being **characterized in that** at least one of said longitudinal members (3) and/or vertical uprights (2) is formed by one or more half-shells or profiled elements with complex cross section (12, 13, 14, 15), which are designed to partially overlap and then be stably fixed one to the other, and by a series of through fixing elements (4) structured so as to lock together in a stable way said one or more half-shells or profiled elements with complex cross section (12, 13, 14, 15); at least one of said through fixing elements (4) comprising an expansion plug (5) made of vulcanized rubber, which is designed to be mounted passing through two or more overlapping flaps of one or more of said half-shells or profiled elements with complex cross section (12, 13, 14, 15), and an expander nail (6) made of plastic or metal material, which is designed to be force-fitted into said expansion plug (5) so as to cause expansion of the body of said expansion plug (5) against the flaps of the half-shells or profiled elements with complex cross section (12, 13, 14, 15) with consequent stable locking thereof against one another.

2. A guardrail as claimed in Claim 1, **characterized in that** said expansion plug (5) is formed by a stem (7) having a substantially cylindrical shape, which extends coaxial with the longitudinal axis (L) of the expansion plug, and by a head (8) which extends in cantilever fashion from one end of the stem (7) so as to form a substantially mushroom-shaped monolithic body (5).

3. A guardrail as claimed in Claim 2, **characterized in that** said expansion plug (5) is provided with a central hole (5a) which extends through the head (8) and at least one stretch of the stem (7) keeping itself locally coaxial with the longitudinal axis (L) of the expansion plug; said central hole (5a) being designed to be engaged by said expander nail (6).

4. A guardrail as claimed in Claim 2 or 3, **characterized in that** the terminal segment (7a) of the stem (7) of said expansion plug (5), which faces the opposite side of the head (8), is provided with at least one diametral cuts (9) designed to divide said terminal segment (7a) into a plurality of spherical wedges angularly distributed about the longitudinal axis (L) of the expansion plug.

5. A guardrail as claimed in Claim 2, 3 or 4, **characterized in that** the terminal segment (7a) of the stem (7) of said expansion plug (5), which faces the opposite side of the head (8), has an ogival or cone-truncated shape.

6. A guardrail as claimed in any one of the foregoing Claims, **characterized in that** said expansion plug (5) is made of tear-resistant vulcanized rubber.

7. A guardrail as claimed in any one of the foregoing claims, **characterized in that** said expander nail (6) is formed by a stem (10) having a substantially cylindrical shape, which extends coaxial with the nail longitudinal axis (L) and is designed to engage the central hole (5a) of said expansion plug (5), and by a head (11) extending in cantilever fashion from one end of said stem (10) coaxial with the nail longitudinal axis (L), so as to form a substantially mushroom-shaped monolithic body (6).

8. A guardrail as claimed in Claim 7, **characterized in that** the stem (10) of said expander nail (6) has an external diameter that approximates by excess the diameter of the central hole (5a) present in said expansion plug (5).

9. A guardrail as claimed in Claim 7 or 8, **characterized in that** said expander nail (6) is made, according to choice, of nylon, Teflon, steel, or zinc-plated iron.

10. A guardrail as claimed in any one of the foregoing Claims, **characterized in that** said one or more half-shells or profiled elements with complex cross section (12, 13, 14, 15) are made of metal and/or composite material.

11. A guardrail as claimed in Claim 10, **characterized in that** at least one of said longitudinal members (3) comprises a controlled-deformation rigid strip (3, 12, 13) which is bent back on itself so as to form a tubular body with complex cross section which extends from one vertical upright (2) to another, remaining substantially parallel to the ground at a given height from the ground itself, and so that identifiable thereon are at least one first longitudinal portion (3', 12) and one second longitudinal portion (3", 13) contiguous one to the other;
the first longitudinal portion (3', 12) of the strip (3, 12, 13) being laterally delimited by a first side edge (3a, 12a) of said strip (3, 12, 13), being positioned facing the vertical uprights (2) of the guardrail, and having a substantially S-shaped cross section so that the first side edge (3a, 12a) of said strip (3) is positioned in the proximity of the tops of the vertical uprights (2), and that the boundary line with the second longitudinal portion (3", 13) of said strip (3, 12, 13) is positioned underneath the first side edge (3a, 12a) of the strip (3, 12, 13), at a pre-set minimum distance (h) from the ground;
the second longitudinal portion (3", 13) of the strip (3, 12, 13) having, instead, a substantially C-shaped cross section so as to cover said first longitudinal portion (3', 12) and so that the second side edge (3b, 13a) of said strip (12, 13) is positioned bearing upon the first side edge (3a, 12a) of the same strip (3, 12, 13).

12. A guardrail as claimed in Claim 11, **characterized in that** the first side edge (3a, 12a) of said strip (3, 12, 13) overlaps the second side edge (3b, 13b) of the same strip (3, 12, 13) so as to form a longitudinal ribbing, and said through fixing elements (4) are distributed in a through way along said longitudinal ribbing.

13. A guardrail as claimed in Claim 12, **characterized in that** the rigid strip (3, 12, 13) forming said longitudinal member (3) is stably fixed to said vertical uprights (2) in an area corresponding to the longitudinal ribbing formed by the overlapping of the first side edge (3a, 12a) of the strip (3, 12, 13) with the second side edge (3b, 13a) of the same strip (3, 12, 13), via some of said through fixing elements (4).

14. A guardrail as claimed in any one of Claim 11, 12 or 13, **characterized in that** it moreover comprises a sheaf of retaining wires (16) which have their ends anchored to the ground and extend substantially parallel to the ground, close to the longitudinal members (3) forming said longitudinal containment cross-member, engaging in sliding manner corresponding through holes purposely made on guardrail vertical uprights (2).

15. A guardrail as claimed in Claim 14, **characterized in that** it also comprises a series of tensioning devices (17), which are distributed on the various retaining wires (16) and are structured so as to enable adjustment of the value of the tension force acting on the retaining wire (16) on which they are fitted.

16. A guardrail as claimed in any one of Claims 11 to 15, **characterized in that** said rigid strip (3, 12, 13) is at least partially made of composite material.

17. A guardrail as claimed in any one of Claims 11 to 16, **characterized in that** said vertical uprights (2) are at least partially made of composite material.

18. A guardrail as claimed in Claim 16 or 17, **characterized in that** said composite material comprises at least one layer of appropriately interwoven glass fibres and/or carbon fibres and/or aramidic fibres embedded in an epoxy-resin matrix.

19. A guardrail as claimed in any one of Claims 14 to 18, **characterized in that** said retaining wires (16) are made of synthetic material.

20. A guardrail as claimed in Claim 19, **characterized in that** said retaining wires (16) are made of nylon and/or carbon.

21. A guardrail as claimed in any one of Claims 11 to 20, **characterized in that** the boundary line between said first longitudinal portion (3', 12) and said second longitudinal portion (3", 13) of said strip (3, 12, 13) is positioned at a minimum distance (h) from the ground comprised between 1 and 10 centimetres.

22. A through fixing element (4) for modular guardrails (1), **characterized by** being made up of an expansion plug (5) made of vulcanized rubber, which is designed to be mounted passing through two or more flaps of half-shells or profiled elements with complex cross section (12, 13, 14, 15) forming one or more pieces of said guardrail (1), and an expander nail (6) made of plastic or metal material, which is designed to be force-fitted into said expansion plug (5) so as to cause expansion of the body of said expansion plug (5) against said half-shells or profiled elements with complex cross section (12, 13, 14, 15) with consequent stable locking thereof against one another.

23. A through fixing element as claimed in Claim 22, **characterized in that** said expansion plug (5) is formed by a stem (7) having a substantially cylindrical shape, and which extends coaxial with the longitudinal axis (L) of the expansion plug, and by a head (8) extending in cantilever fashion from one end of the stem (7) so as to form a substantially mushroom-shaped monolithic body (5).

24. A through fixing element as claimed in Claim 23, **characterized in that** said expansion plug (5) is provided with a central hole (5a) extending through the head (8) and at least one stretch of the stem (7), remaining locally coaxial with the longitudinal axis (L) of the expansion plug; said central hole (5a) being designed to be engaged by said expander nail (6).

25. A through fixing element as claimed in Claim 23 or 24, **characterized in that** the terminal segment (7a) of the stem (7) of said expansion plug (5), which faces the opposite side of the head (8), is provided with at least one diametral cut (9), designed to divide said terminal segment (7a) into a plurality of spherical wedges angularly distributed about the longitudinal axis (L) of the expansion plug.

26. A through fixing element as claimed in any one of Claims 22 to 25, **characterized in that** said expander nail (6) is formed by a stem (10) having a substantially cylindrical shape, and which extends coaxial with the nail longitudinal axis (L) and is designed to engage the central hole (5a) of said expansion plug (5), and by a head (11) extending in cantilever fashion from one end of said stem (10) coaxial with the nail longitudinal axis (L) so as to form a substantially mushroom-shaped monolithic body (6).

27. A through fixing element as claimed in Claim 26, **characterized in that** the stem (10) of said expander nail (6) has an external diameter that approximates by excess the diameter of the central hole (5a) present in said expansion plug (5).

28. A through fixing element as claimed in Claim 26 or 27, **characterized in that** said expander nail (6) is made, according to choice, of nylon, Teflon, steel or zinc-plated iron.
